# FASCICULE DE BREVET EUROPEEN

(11) **EP 2 771 619 B1**
(45) Date de publication et mention de la délivrance du brevet: **16.12.2015**
(21) Numéro de dépôt: 12787797.5
(22) Date de dépôt: 22.10.2012
(51) Int. Cl.: F23R 3/16, F23R 3/50, F23R 3/18

(54) **CHAMBRE DE COMBUSTION ANNULAIRE DANS UNE TURBOMACHINE**
RINGFÖRMIGE BRENNKAMMER FÜR EINE TURBOMASCHINE
ANNULAR COMBUSTION CHAMBER IN A TURBOMACHINE

(30) Priorité: 26.10.2011 FR 1159715
(43) Date de publication de la demande: 03.09.2014
(73) Titulaire: Snecma, 75015 Paris (FR)
(72) Inventeur: BOURGOIS, Sébastien, Alain, Christophe, F-77550 Moissy Cramayel Cedex (FR); SANDELIS, Denis, Jean, Maurice, F-77550 Moissy Cramayel Cedex (FR)
(74) Mandataire: Pichat, Thierry
(86) Numéro de dépôt international: PCT/FR2012/052415
(87) Numéro de publication internationale: WO 2013/060974

(56) Documents cités:
- EP-A1- 1 870 581
- FR-A1- 2 943 119
- US-A- 4 991 398
- US-A1- 2002 178 726

## Description

La présente invention concerne une chambre annulaire de combustion d'une turbomachine telle qu'un turbopropulseur ou un turboréacteur d'avion.

De manière connue, une chambre annulaire de combustion d'une turbomachine reçoit en amont un flux d'air d'un compresseur haute pression et délivre en aval un flux de gaz chauds entrainant les rotors des turbines haute pression et basse pression.

La chambre annulaire de combustion comprend deux parois de révolution coaxiales qui s'étendent l'une à l'intérieur de l'autre et qui sont reliées à leurs extrémités amont par une paroi annulaire de fond de chambre qui comporte des ouvertures de montage de systèmes d'injection de carburant.

Chaque système d'injection comprend des moyens de support de la tête d'un injecteur de carburant et au moins une vrille qui est disposée en aval de la tête de l'injecteur, coaxialement à celle-ci, et qui délivre un flux d'air tournant afin de former un mélange d'air et de carburant destiné à être brûlé dans la chambre de combustion.

Les vrilles des systèmes d'injection sont alimentées par de l'air provenant d'un diffuseur annulaire monté en sortie du compresseur haute-pression agencé en amont de la chambre de combustion.

Chaque vrille débouche en aval à l'intérieur d'un bol mélangeur comprenant une paroi aval sensiblement tronconique évasée vers l'aval et formée avec une rangée annulaire d'orifices d'injection d'air régulièrement répartis autour de l'axe du bol.

Au moins une bougie d'allumage est montée dans un orifice de la paroi annulaire externe de la chambre de combustion, en aval des systèmes d'injection de carburant.

En fonctionnement, l'air sortant du compresseur haute pression circule à l'intérieur de chaque système d'injection. Le mélange air/carburant est éjecté de chaque système d'injection en formant une nappe d'air et de carburant tournante sensiblement tronconique qui s'élargit vers l'aval. L'angle d'ouverture de la nappe est fonction de l'angle d'ouverture de la paroi tronconique du bol mélangeur, des dimensions des orifices d'injection d'air formés dans cette paroi tronconique. Ainsi, plus les orifices du bol mélangeur ont un diamètre important, plus le débit d'air passant par chacun de ces orifices est important et moins la nappe de mélange air/carburant est évasée. De même, plus les trous sont positionnés en amont sur la paroi tronconique, plus le blocage aérodynamique est important et moins la nappe de mélange air/carburant est évasée.

Dans la technique connue, les systèmes d'injection de la chambre de combustion produisent des nappes de mélange air/carburant qui tournent toutes dans le même sens. Le sens de rotation peut être indifféremment le sens horaire ou le sens antihoraire, lorsque l'on regarde les systèmes d'injection depuis l'aval.

Pour améliorer l'allumage des nappes de mélange air/carburant, il est connu d'agencer la bougie d'allumage dans l'axe d'un système d'injection.

Dans sa demande FR2943119, la demanderesse a proposé d'augmenter l'angle d'ouverture de la nappe de carburant produite par le système d'injection situé au plus près de la bougie. Ce type de configuration s'avère efficace mais peut conduire au mouillage de l'extrémité interne de la bougie par les gouttelettes de carburant, ce qui n'est pas souhaitable pour conserver un fonctionnement optimal de la bougie.

Une chambre annulaire selon le préambule de la revendication 1 est divulguée dans US 2002/0178726 A1. L'invention a pour but d'améliorer l'allumage des nappes de mélange de carburant par rapport aux chambres de combustion de la technique antérieure tout en évitant les inconvénients de la technique antérieure.

A cette fin, elle propose une chambre annulaire de combustion de turbomachine, comprenant deux parois de révolution coaxiales interne et externe, reliées à leurs extrémités amont par une paroi annulaire de fond de chambre comportant des ouvertures de montage de systèmes d'injection comprenant chacun un injecteur et au moins une vrille destinée à produire un flux d'air tournant se mélangeant en aval au carburant en provenance de l'injecteur, et au moins une bougie d'allumage montée dans un orifice de la paroi de révolution externe en aval des systèmes d'injection. La bougie est située circonférentiellement entre deux systèmes d'injection adjacents qui sont configurés de manière à produire des nappes de mélange air/carburant tournant dans des sens opposés.

A la différence de la technique antérieure, la bougie est montée entre deux injecteurs et les deux systèmes d'injection de part et d'autre de la bougie d'allumage sont configurés pour produire des nappes de carburant contrarotatives. On assure ainsi une bonne interpénétration des nappes de carburant dans l'axe de la bougie, ce qui augmente le temps de séjour des gouttelettes de carburant au voisinage de l'extrémité interne de la bougie par rapport à la technique antérieure. L'efficacité de l'allumage de la chambre de combustion ou bien de son rallumage est ainsi améliorée.

Avantageusement, vus depuis l'aval, un premier des deux systèmes d'injection situé circonférentiellement à gauche de la bougie produit une nappe de mélange air/carburant tournant dans le sens horaire et un second des deux systèmes d'injection situé circonférentiellement à droite de la bougie produit une nappe de mélange air/carburant tournant dans le sens antihoraire.

Avec une telle configuration, on observe la formation d'une zone de recirculation des gouttelettes de carburant au voisinage de l'extrémité interne de la bougie et les gouttelettes de carburant au sein de cette zone de recirculation sont plus fines, ce qui améliore encore l'allumage ou le rallumage de la chambre de combustion.

Cette configuration est plus intéressante que celle où, vus depuis l'aval, un premier des deux systèmes d'injection situé circonférentiellement à gauche de la bougie produit une nappe de mélange air/carburant tournant dans le sens antihoraire et un second des deux systèmes d'injection situé circonférentiellement à droite de la bougie produit une nappe de mélange air/carburant tournant dans le sens horaire, puisque la zone de recirculation serait plutôt créée au niveau d'une paroi annulaire délimitant intérieurement la chambre de combustion.

Dans une réalisation de l'invention, chacun des deux systèmes d'injection précités comprend un bol à paroi sensiblement tronconique en aval de la vrille et formé avec une rangée annulaire d'orifices d'injection d'air destinés à produire une nappe sensiblement tronconique et tournante de mélange air/carburant, ces orifices étant répartis et dimensionnés de manière à ce que la nappe de mélange air/carburant produite présente un élargissement local interceptant l'axe de la bougie.

Avec une telle configuration, on conserve une même ouverture angulaire pour les deux bols situés de part et d'autre de la bougie, et une modification des orifices des bols permet de former un élargissement local de leur nappe de carburant interceptant l'axe de la bougie.

Ces élargissements des nappes de carburant permettent de projeter localement la nappe de carburant plus près de l'extrémité interne de la bougie, ce qui augmente encore le temps de séjour des gouttelettes au voisinage de l'extrémité interne de la bougie et améliore l'allumage du mélange air/carburant.

Selon une autre caractéristique de l'invention, le bol d'au moins un des deux systèmes d'injection comprend des orifices de plus faible diamètre que les autres orifices dudit bol, ces orifices à diamètre réduit étant formés sur un secteur angulaire de dimension et de position angulaire prédéterminées de manière à former l'élargissement interceptant l'axe de la bougie.

La réduction du diamètre des orifices sur un secteur donné du bol permet de réduire le débit d'air passant par ces orifices. L'air sortant par ces orifices impacte moins le mélange air/carburant issu de la vrille amont, ce qui conduit à augmenter localement l'angle d'éjection du mélange air/carburant et forme un élargissement local de la nappe de carburant.

Selon une autre caractéristique de l'invention, les orifices du secteur angulaire précité de chaque bol précité ont un diamètre inférieur d'au moins 40% au diamètre des autres orifices du bol.

Dans une autre réalisation de l'invention, le bol d'au moins un des deux systèmes d'injection est dépourvu d'orifices sur un secteur angulaire de dimension et de position prédéterminées de manière à former l'élargissement interceptant l'axe de la bougie.

La suppression sur un secteur des orifices de la paroi tronconique du bol permet d'augmenter localement l'angle d'éjection de la nappe de mélange air/carburant, et de former un élargissement local de cette nappe qui intercepte l'axe de la bougie.

Les secteurs angulaires des deux systèmes d'injection sont préférentiellement symétriques l'un de l'autre par rapport à un plan radial contenant l'axe de la bougie.

Dans une réalisation pratique de l'invention, le ou chaque secteur angulaire précité s'étend sur environ 20° à 50°.

La bougie est avantageusement positionnée sensiblement à égale distance circonférentiellement des deux systèmes d'injection adjacents.

L'invention propose également une turbomachine, telle qu'un turbopropulseur ou un turboréacteur d'avion, comprenant une chambre de combustion telle que décrite précédemment.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique partielle en coupe axiale d'une chambre annulaire de combustion d'un type connu ;
- la figure 2 est une vue schématique partielle à plus grande échelle de la zone délimitée en pointillés sur la figure 1 ;
- la figure 3 est une vue schématique en coupe transverse de la vrille primaire du système d'injection de la figure 2 ;
- la figure 4 est une vue schématique depuis l'aval et en coupe transverse des systèmes d'injection produisant des nappes de mélange air/carburant contrarotatives et situés de part et d'autre d'une bougie d'allumage dans une chambre de combustion selon l'invention ;
- la figure 5 est une vue schématique en coupe transverse de la vrille primaire du système d'injection de la figure 4 situé circonférentiellement immédiatement à gauche de la bougie ;
- la figure 6 est une vue schématique en coupe transverse d'une variante de réalisation selon l'invention des deux systèmes d'injection situés de part et d'autre de la bougie ;
- la figure 7 est une vue schématique selon un plan de coupe transverse contenant l'axe de la bougie et représentant les nappes de carburant des systèmes d'injection de la figure 6 ;
- la figure 8 est une vue schématique en coupe transverse d'une autre variante de réalisation selon l'invention des systèmes d'injection situés de part et d'autre de la bougie.

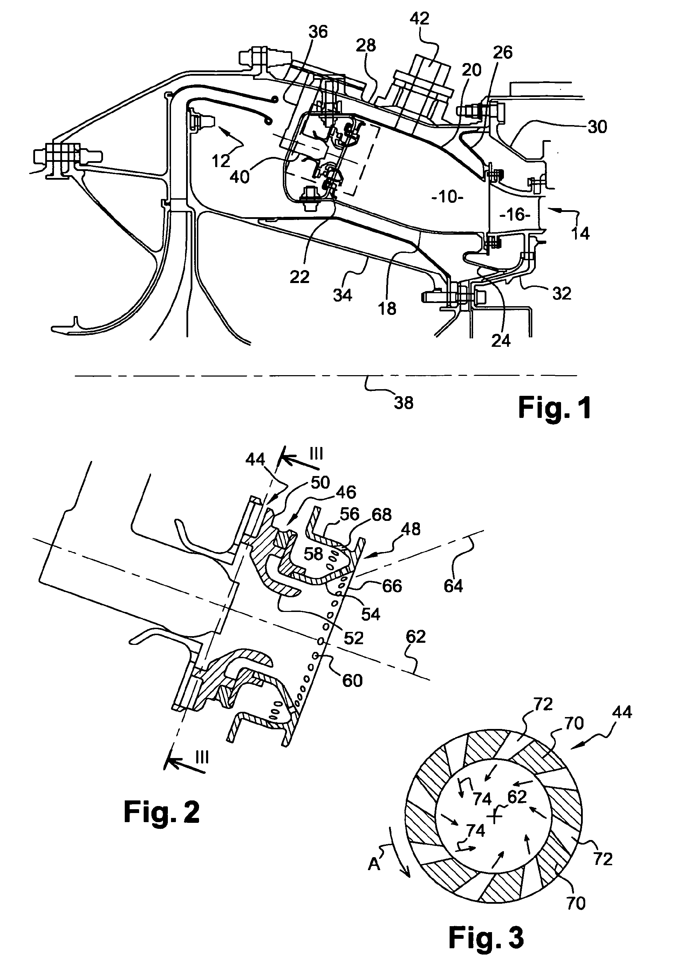

On se réfère d'abord à la figure 1 qui représente une chambre annulaire de combustion 10 d'une turbomachine telle qu'un turboréacteur ou un turbopropulseur d'avion, agencée en sortie d'un diffuseur centrifuge 12 monté en sortie d'un compresseur haute pression (non représenté). La chambre de combustion 10 est suivie d'une turbine haute pression 14 dont seul le distributeur d'entrée 16 est représenté.

La chambre de combustion 10 comprend deux parois de révolution tronconiques interne 18 et externe 20 coaxiales, agencées l'une à l'intérieur de l'autre et à section se réduisant vers l'aval. Une telle chambre de combustion est dite convergente. Les parois annulaires interne 18 et externe 20 sont reliées à leurs extrémités amont à une paroi annulaire de fond de chambre 22 et fixées en aval par des brides annulaires interne 24 et externe 26. La bride annulaire externe 26 est en appui radialement externe sur un carter externe 28 et en appui axial sur une bride radiale 30 de fixation du distributeur 16 de la turbine haute pression au carter externe 28. La bride annulaire interne 24 de la chambre de combustion est en appui radial et axial sur une pièce annulaire interne 32 de fixation du distributeur 16 à une paroi annulaire interne 34.

Le fond de chambre 22 comporte des ouvertures de montage de systèmes d'injection d'un mélange air-carburant dans la chambre, l'air provenant du diffuseur centrifuge 12 et le carburant étant amené par des injecteurs 36.

Les injecteurs 36 sont fixés à leurs extrémités radialement externes sur le carter externe 28 et sont régulièrement répartis sur une circonférence autour de l'axe de révolution 38 de la chambre. Chaque injecteur 36 comprend à son extrémité radialement interne une tête d'injection 40 de carburant qui est alignée avec l'axe d'une ouverture correspondante du fond de chambre 22.

Le mélange d'air et de carburant injecté dans la chambre 10 est enflammé au moyen d'au moins une bougie d'allumage 42 qui s'étend radialement à l'extérieur de la chambre 10. L'extrémité radialement externe de la bougie est fixée par des moyens appropriés au carter externe 28 et reliée à des moyens d'alimentation électrique (non représentés) situés à l'extérieur du carter 28, et son extrémité interne est engagée dans un orifice de la paroi externe 20 de la chambre.

Chaque système d'injection, comme on le voit mieux en figure 2, comporte une vrille primaire amont 44 et une vrille secondaire aval 46 coaxiales reliées en amont à des moyens de centrage et de guidage de la tête de l'injecteur, et en aval à un bol mélangeur 48 qui est monté axialement dans l'ouverture de la paroi de fond de chambre 22.

Les vrilles 44, 46 sont séparées l'une de l'autre par une paroi radiale 50 reliée à son extrémité radialement interne à un venturi 52 qui s'étend axialement vers l'aval à l'intérieur de la vrille aval et qui sépare les écoulements d'air issus des vrilles amont 44 et aval 46. Une première veine annulaire d'écoulement d'air est formée à l'intérieur du venturi 52 et une seconde veine annulaire d'écoulement d'air est formée à l'extérieur du venturi 52.

Le bol mélangeur 48 comprend une paroi sensiblement tronconique 54 évasée vers l'aval et reliée à son extrémité aval à un rebord cylindrique 56 s'étendant vers l'amont et monté axialement dans l'ouverture de la paroi de fond de chambre 22. L'extrémité amont de la paroi tronconique du bol est fixée par une pièce annulaire intermédiaire 58 à la vrille secondaire aval 46.

La paroi tronconique 54 du bol comporte une rangée annulaire d'orifices 60 d'injection d'air régulièrement répartis autour de l'axe 62 du bol 48. L'air passant par ces orifices et l'air s'écoulant dans les veines à l'intérieur et à l'extérieur du venturi 54 se mélangent au carburant pulvérisé par l'injecteur pour former une nappe tournante de mélange d'air et de carburant ayant une forme sensiblement tronconique 64 s'élargissant vers l'aval. Les axes 66 de chacun des orifices 60 d'injection d'air du bol 48 sont inclinés par rapport à l'axe 62 du bol et convergent vers celui-ci en direction aval. Une seconde rangée annulaire d'orifices 68 est formée à l'extrémité aval du rebord cylindrique 56.

En fonctionnement, les vrilles amont 44 et aval 46 du système d'injection induisent une rotation du flux d'air et de carburant pulvérisé et les orifices d'injection d'air 60 de la paroi tronconique 54 du bol 48 réalisent un cisaillement du mélange air/carburant. Ainsi, plus le diamètre des orifices d'injection d'air 60 du bol 48 est grand, plus le débit d'air passant par ces orifices est important, ce qui diminue l'angle d'ouverture 64 de la nappe tronconique de mélange air/carburant.

La figure 3 est une vue schématique depuis l'aval et en coupe transversale de la vrille primaire 44, la coupe étant effectuée selon une ligne III-III du système d'injection représenté en figure 2.

La vrille primaire 44 comprend une pluralité d'aubages 70 régulièrement répartis autour de l'axe 62 de la vrille 44. Ces aubages 70 s'étendent en direction radiale et circonférentielle et délimitent entre eux des canaux 72 de passage d'air débouchant à l'intérieur de la vrille 44. Les débouchés internes des canaux 72 sont tous orientés selon des directions 74 inclinées par rapport à l'axe 62 de la vrille 44 de manière à produire un flux d'air tournant dans le sens inverse des aiguilles d'une montre (flèche A).

Avec une telle vrille primaire 44, le mélange d'air et de carburant sortant du système d'injection forme une nappe de mélange d'air et de carburant qui tourne dans le sens inverse des aiguilles d'une montre.

La vrille secondaire 46 comprend également une pluralité d'aubages régulièrement répartis autour de l'axe de la vrille. Ces aubages s'étendent en direction radiale et circonférentielle et délimitent entre eux des canaux de passage d'air. De manière similaire à la vrille primaire, les débouchés internes des canaux de la vrille secondaire sont tous orientés selon des directions inclinées par rapport à l'axe de la vrille secondaire de manière à produire un flux d'air tournant dans le sens inverse des aiguilles d'une montre.

Dans une variante de l'invention, les débouchés internes des canaux de la vrille secondaire 46 peuvent être orientés selon des directions inclinées par rapport à l'axe de la vrille secondaire de manière à produire un flux d'air tournant dans le sens des aiguilles d'une montre, c'est-à-dire un flux d'air tournant dans le sens inverse du flux d'air de la vrille primaire.

La vrille secondaire permet d'accélérer l'expansion du mélange air/carburant sortant du système d'injection. Elle permet également de générer un cisaillement avec l'écoulement ralenti en sortie de venturi et contribue ainsi à améliorer la pulvérisation du mélange air/carburant.

Les systèmes d'injection peuvent donc comprendre deux vrilles primaire et secondaire co-rotatives, c'est-à-dire conduisant à la formation de flux d'air tournant dans le même sens ou bien comprenant des vrilles primaire et secondaire produisant des flux d'air tournant dans des sens opposés. Dans ce dernier cas, le sens de rotation du mélange air/carburant sortant du système d'injection est principalement piloté par les angles de calage des débouchés des canaux des vrilles primaire et secondaire ainsi que par les débits passant par les vrilles primaire et secondaire.

Dans la chambre de combustion représentée en figure 1, tous les systèmes d'injection sont configurés de la même manière et produisent des nappes de mélange air/carburant tournant toutes dans le sens antihoraire.

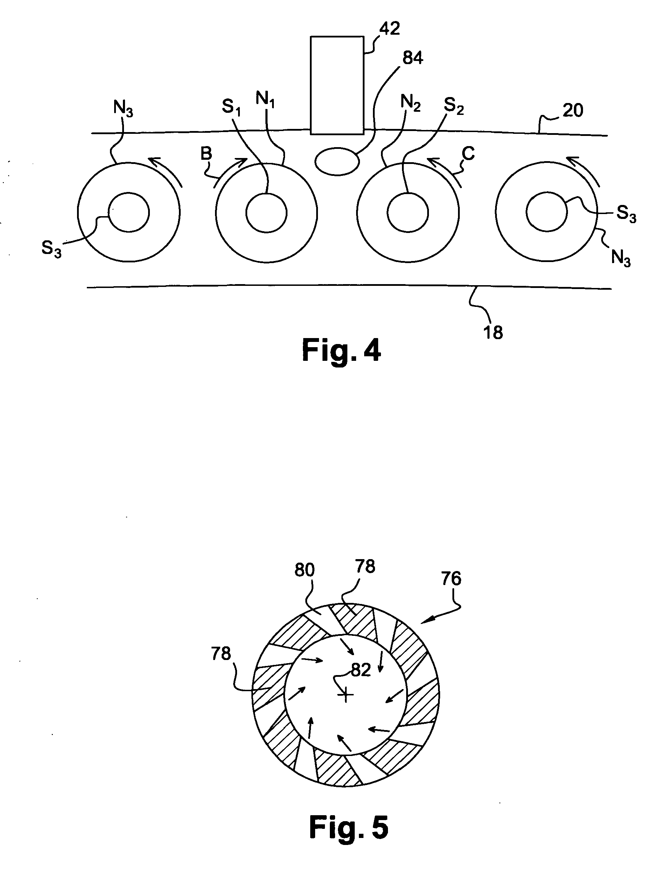

L'invention permet d'améliorer l'allumage ou bien le rallumage de la chambre de combustion en montant la bougie d'allumage 42 circonférentiellement entre deux systèmes d'injection S₁, S₂ adjacents qui produisent des nappes de mélange air/carburant N₁, N₂ tournant dans des sens opposés (flèches B et C sur la figure 4).

Le système d'injection S₁ agencé circonférentiellement immédiatement à gauche de la bougie et vu depuis l'aval, comprend une vrille primaire similaire à celle décrite en référence à la figure 3. Cette vrille 76 en diffère en ce que les aubages 78 délimitent entre eux des canaux 80 dont les débouchés internes sont tous orientés selon des directions inclinées par rapport à l'axe 82 de la vrille 76 de manière à produire un flux d'air tournant dans le sens des aiguilles d'une montre (figure 5).

Le système d'injection S₂ agencé circonférentiellement immédiatement à droite de la bougie, comprend une vrille primaire 44 identique à celle décrite en référence à la figure 3.

Les autres systèmes d'injection S₃, c'est-à-dire ceux qui ne sont pas situés circonférentiellement immédiatement à côté de la bougie 42, produisent tous des nappes N₃ de mélange air/carburant tournant dans le même sens. Ce sens de rotation peut être soit le sens des aiguilles d'une montre soit le sens inverse des aiguilles d'une montre (figure 4).

Le montage de la bougie 42 entre deux systèmes d'injection S₁, S₂ adjacents produisant des nappes N₁, N₂ de mélange air/carburant contrarotatives permet de former une zone de recirculation 84 des gouttelettes de carburant au plus près de l'extrémité interne de la bougie 42. Les directions d'écoulement des gouttelettes au sein de la zone 84 de recirculation sont très hétérogènes, ce qui contribue à augmenter le temps de parcours des gouttelettes de carburant au voisinage de la bougie et améliore l'allumage de la chambre de combustion. De plus, les gouttelettes de carburant dans la zone 84 de recirculation sont plus fines, ce qui facilite encore la formation de la flamme de combustion.

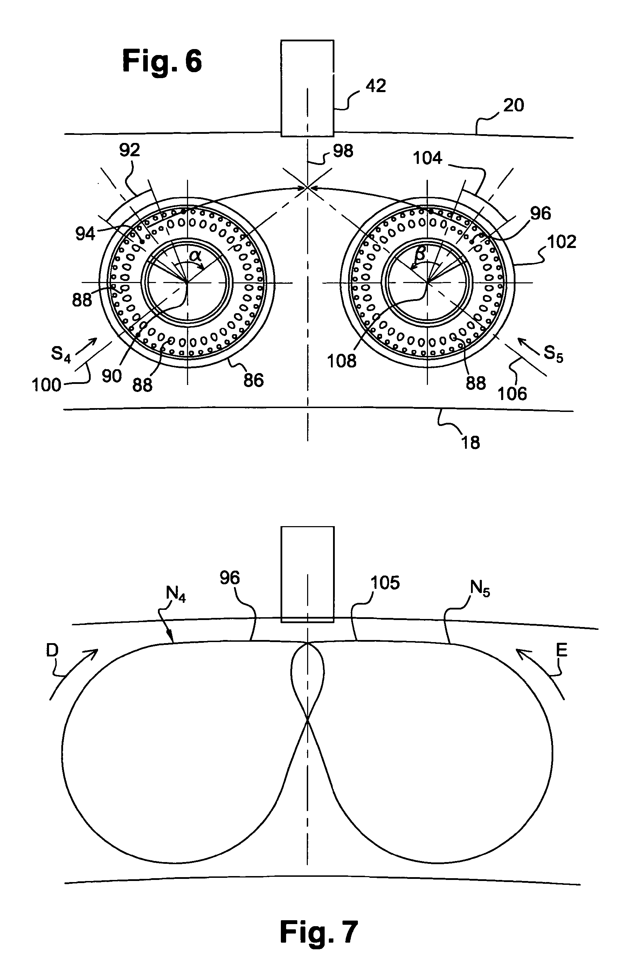

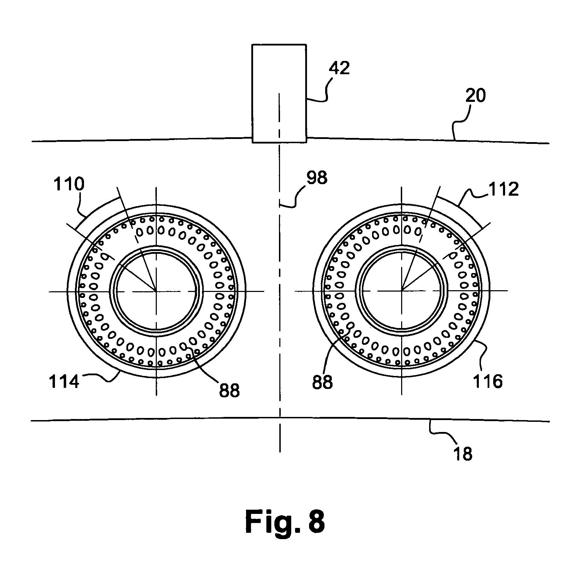

La figure 7 est une vue schématique depuis l'aval de deux systèmes d'injection S₄, S₅ adjacents encadrant circonférentiellement la bougie 42 et la figure 8 représente les nappes N₄ et N₅ de mélange air/carburant produites par les systèmes d'injection S₄ et S₅, respectivement.

Le système d'injection S₄ situé circonférentiellement à gauche de la bougie 42 comprend une vrille primaire 76 conforme à celle décrite en référence à la figure 5 de manière à produire une nappe N₄ de mélange air/carburant tournant dans le sens des aiguilles d'une montre (flèche D, figure 7). Ce système d'injection S₄ comprend un bol mélangeur 86 comportant une pluralité d'orifices 88 d'injection d'air régulièrement répartis autour de l'axe du bol 90. Le bol 86 comprend un secteur angulaire 92 dont les orifices 94 ont un diamètre inférieur au diamètre des autres orifices 88 du bol 86 (figure 6).

Lorsque le mélange air/carburant pénètre à l'intérieur du bol 86, le débit d'air passant par les orifices 94 du secteur angulaire 92 est plus faible que le débit d'air passant par les autres orifices 88 du bol 86. Il s'ensuit que les particules d'air et de carburant passant au voisinage de ce secteur 92 sortent du bol 86 avec une trajectoire plus évasée que les particules passant au voisinage des autres orifices 88 du bol 86. Il en résulte un élargissement local 96 de la nappe de carburant pulvérisé (figure 7).

Du fait de la forme tronconique et tournante de la nappe de mélange air/carburant, chaque particule d'air et de carburant suit une trajectoire sensiblement hélicoïdale tronconique. L'élargissement local prend ainsi une forme correspondant à ces trajectoires hélicoïdales tronconiques.

Pour que l'élargissement 96 intercepte l'axe 98 de la bougie 42 et vienne au plus près de l'extrémité interne de la bougie 42, le secteur 92 du bol 86 doit être décalé angulairement d'un angle α dans le sens inverse de rotation du mélange air/carburant, c'est-à-dire dans le sens inverse des aiguilles d'une montre, par rapport à un plan 100 contenant l'axe du bol 90 et passant par la position angulaire autour de l'axe 90 du bol pour laquelle on souhaite que l'élargissement intercepte l'axe 98 de la bougie 42. Sur la figure 6, le plan 100 est représenté par une ligne et est perpendiculaire au plan de la feuille.

Le système d'injection S₅ situé circonférentiellement à droite de la bougie comprend une vrille primaire conforme à celle décrite en référence à la figure 3 de manière à produire une nappe de mélange air/carburant tournant dans le sens inverse des aiguilles d'une montre (flèche E, figure 7). Ce système d'injection S₅ comprend un bol mélangeur 102 comportant une pluralité d'orifices 88 régulièrement répartis autour de l'axe du bol et identiques à ceux du bol 86 du système d'injection S₄. Le bol 102 comprend un secteur angulaire 104 dont les orifices 96 ont un diamètre inférieur au diamètre des autres orifices du bol 88, ce qui permet de former un élargissement local 105 de la nappe de carburant N₅ (figure 7).

Le secteur angulaire 104 du bol 102 est décalé angulairement d'un angle β dans le sens inverse de rotation du mélange air/carburant, c'est-à-dire dans le sens des aiguilles d'une montre, par rapport à un plan 106 contenant l'axe 108 du bol 102 et passant par la position angulaire autour de l'axe 108 du bol 102 à laquelle on souhaite que l'élargissement intercepte l'axe 98 de la bougie 42.

Les angles α et β sont mesuré à partir du milieu de chacun des secteurs 92, 104 des bols 86, 102 comportant des orifices à diamètre réduit.

Les étendues angulaires des secteurs 92, 104 des bols 86, 102 des systèmes d'injection S₁ et S₂ déterminent les étendues angulaires de chacun des élargissements 96, 105 des nappes N₄, N₅ de mélange air/carburant autour des axes 90, 108 des bols 86, 102, respectivement.

Avec une telle configuration, les déformations locales 96, 105 des nappes N₄, N₅ de mélange air/carburant produites par les systèmes d'injection S₄ et S₅ situés de part et d'autre de la bougie permettent de projeter au plus près de l'extrémité interne de la bougie 42 des gouttelettes de carburant, ce qui augmente le temps de séjour des particules au voisinage de l'extrémité interne de la bougie 42 et facilite l'allumage de la chambre de combustion.

Dans la réalisation représentée en figure 6, les secteurs angulaires 92, 104 des deux systèmes d'injection S₄ et S₅ sont symétriques l'un de l'autre par rapport à un plan radial contenant l'axe de la bougie. Dans ce cas, les angles α et β sont identiques.

Dans une autre réalisation de l'invention représentée en figure 8, les secteurs des bols comprenant des orifices à diamètre réduit sont remplacés par des secteurs 110, 112 dépourvus d'orifices d'injection d'air. Ces bols 114, 116 permettent d'obtenir des nappes de carburant sensiblement de même forme que celles obtenues avec des bols 86, 102 comportant un secteur 92, 104 avec des orifices 94, 96 de diamètre réduit. Seule les largeurs des élargissement des nappes de carburant en direction radiale sont plus importantes du fait qu'aucun débit d'air ne circule à travers les secteurs 110, 112 des bols 114, 116.

Il serait possible de combiner un système d'injection comprenant un bol ayant un secteur comportant des orifices à diamètre réduit avec un système d'injection comprenant un bol ayant un secteur dépourvu d'orifices.

Dans une réalisation pratique de l'invention, les secteurs 92, 104 des bols 86, 102, comprenant des orifices 94, 96 de diamètre réduit et les secteurs 110, 112 des bols 114, 116 dépourvu d'orifices s'étendent angulairement sur environ 50° et les angles α et β sont de l'ordre de 80° Les angles α et β peuvent être compris entre 0 et 180°.

En pratique, le positionnement et l'étendue angulaires des deux secteurs angulaires 92, 104 comportant des orifices à diamètre réduit ou 110, 112 dépourvu d'orifices sont déterminés par simulation tridimensionnelle. Une telle simulation prend en compte de nombreux paramètres tels que la forme et l'inclinaison des aubages des vrilles, le débit d'air du compresseur haute pression, le débit de carburant des injecteurs, etc.

Dans les différentes réalisations de l'invention, la bougie 42 peut être positionnée sensiblement à égale distance circonférentiellement des deux systèmes d'injection adjacents.

## Revendications

1. Chambre annulaire (10) de combustion de turbomachine, comprenant deux parois de révolution coaxiales interne (18) et externe (20), reliées à leurs extrémités amont par une paroi annulaire de fond de chambre (22) comportant des ouvertures de montage de systèmes d'injection comprenant chacun un injecteur (36) et au moins une vrille (76, 44) destinée à produire un flux d'air tournant se mélangeant en aval au carburant en provenance de l'injecteur (36) et au moins une bougie (42) d'allumage montée dans un orifice de la paroi de révolution externe (20) en aval des systèmes d'injection, la bougie (42) étant située circonférentiellement entre deux systèmes d'injection (S₁, S₂) adjacents, **caractérisé en ce que** lesdits deux systèmes d'injection adjacents (S1, S2) sont configurés de manière à produire des nappes de mélange air/carburant tournant dans des sens opposés (B, C).

2. Chambre selon la revendication 1, **caractérisée en ce que**, vus depuis l'aval, un premier (S₁) des deux systèmes d'injection situé circonférentiellement à gauche de la bougie (42) produit une nappe (N₁) de mélange air/carburant tournant dans le sens horaire et un second (S₂) des deux systèmes d'injection situé circonférentiellement à droite de la bougie (42) produit une nappe (N₂) de mélange air/carburant tournant dans le sens antihoraire.

3. Chambre selon la revendication 2, **caractérisée en ce que** chacun des deux systèmes d'injection (S₄, S₅) adjacents comprend un bol (86, 102) à paroi sensiblement tronconique en aval de la vrille et formé avec une rangée annulaire d'orifices (88) d'injection d'air destinés à produire une nappe sensiblement tronconique et tournante de mélange air/carburant, ces orifices (88, 94) étant répartis et dimensionnés de manière à ce que la nappe de mélange air/carburant produite présente un élargissement local interceptant l'axe de la bougie.

4. Chambre selon la revendication 3, **caractérisée en ce que** le bol d'au moins un des deux systèmes d'injection (S₄, S₅) comprend des orifices (94) de plus faible diamètre que les autres orifices (88) dudit bol (86), ces orifices (94) à diamètre réduit étant formés sur un secteur angulaire (92, 104) de dimension et de position angulaire prédéterminées de manière à former l'élargissement interceptant l'axe de la bougie (42).

5. Chambre selon la revendication 4, **caractérisée en ce que** les orifices (94) du secteur (92, 104) angulaire précité de chaque bol (86, 102) ont un diamètre inférieur d'au moins 40% au diamètre des autres orifices du bol.

6. Chambre selon l'une des revendications 3 à 5, **caractérisée en ce que** le bol (114, 116) d'au moins un des deux systèmes d'injection est dépourvu d'orifices sur un secteur angulaire (110, 112) de dimension et de position prédéterminées de manière à former l'élargissement interceptant l'axe de la bougie (42).

7. Chambre selon l'une des revendications 4 à 6, **caractérisée en ce que** les secteurs angulaires (92, 104, 110, 112) des deux systèmes d'injection sont symétriques l'un de l'autre par rapport à un plan radial contenant l'axe de la bougie (42).

8. Chambre selon l'une des revendications 4 à 7, **caractérisée en ce que** le ou chaque secteur angulaire (92, 104, 110, 112) précité s'étend sur environ 20° à 50°.

9. Chambre selon l'une des revendications précédentes, **caractérisée en ce que** la bougie (42) est positionnée sensiblement à égale distance circonférentiellement des deux systèmes d'injection adjacents.

10. Turbomachine, telle qu'un turbopropulseur ou un turboréacteur d'avion, comprenant une chambre de combustion selon l'une des revendications précédentes.

## Patentansprüche

1. Ringförmige Brennkammer (10) für eine Turbomaschine bzw. ein Turbotriebwerk, enthaltend zwei koaxial verlaufende Umlaufwände, nämlich eine innere (18) und eine äußere (20), die an ihren stromaufwärtigen Enden über eine ringförmige Kammerbodenwand (22) miteinander verbunden sind, die Öffnungen zum Anbringen von Einspritzsystemen aufweist, die jeweils zumindest einen Injektor (36) und zumindest eine Förderschnecke (76, 44) aufweisen, die dazu bestimmt ist, einen rotierenden Luftstrom zu erzeugen, der sich stromabwärts mit vom Injektor (36) stammendem Kraftstoff vermischt, sowie zumindest eine Zündkerze (42), die in einer Öffnung der äußeren Umlaufwand (20) stromabwärts der Einspritzsysteme montiert ist, wobei die Zündkerze (42) umfänglich zwischen zwei aneinandergrenzenden Einspritzsystemen (S₁, S₂) liegt, **dadurch gekennzeichnet, dass** die beiden aneinandergrenzenden Einspritzsysteme (S₁, S₂) so ausgestaltet sind, dass sie Schichten aus Luft-/Kraftstoffgemisch bilden, die in entgegengesetzten Richtungen (B, C) rotieren.

2. Kammer nach Anspruch 1, **dadurch gekennzeichnet, dass** von stromabwärts gesehen ein erstes (S₁) der beiden Einspritzsysteme, das umfänglich links von der Kerze (42) liegt, eine Schicht (N₁) aus Luft-/Kraftstoffgemisch erzeugt, die in Uhrzeigerrichtung rotiert, und ein zweites (S₂) der Einspritzsysteme, das umfänglich rechts von der Kerze (42) liegt, eine Schicht (N₂) aus Luft-/Kraftstoffgemisch erzeugt, die in Gegenuhrzeigerrichtung rotiert.

3. Kammer nach Anspruch 2, **dadurch gekennzeichnet, dass** jedes der beiden aneinandergrenzenden Einspritzsysteme (S₄, S₅) eine Schale (86, 102) mit im Wesentlichen kegelstumpfförmiger Wand stromabwärts der Förderschnecke aufweist, die aus einer ringförmigen Reihe von Lufteinblasöffnungen (88) gebildet ist, die dazu bestimmt sind, eine im Wesentlichen kegelstumpfförmig rotierende Schicht aus Luft- und Kraftstoffgemisch zu erzeugen, wobei diese Öffnungen (88, 94) so verteilt und bemessen sind, dass die erzeugte Schicht aus Luft/Kraftstoffgemisch eine bereichsweise Erweiterung aufweist, welche die Achse der Kerze schneidet.

4. Kammer nach Anspruch 3, **dadurch gekennzeichnet, dass** die Schale zumindest eines der beiden Einspritzsysteme (S₄, S₅) Öffnungen (94) mit geringerem Durchmesser als die weiteren Öffnungen (88) der Schale (86) aufweist, wobei diese im Durchmesser verminderten Öffnungen (94) an einem Winkelsektor (92, 104) mit vorbestimmtem Winkelmaß und vorbestimmter Winkelposition ausgebildet sind, so dass sie die Erweiterung bilden, welche die Achse der Kerze (42) schneidet.

5. Kammer nach Anspruch 4, **dadurch gekennzeichnet, dass** die Öffnungen (94) des vorgenannten Winkelsektors (92, 104) einer jeden Schale (86, 102) einen Durchmesser haben, der um mindestens 40 % kleiner als der Durchmesser der weiteren Öffnungen der Schale ist.

6. Kammer nach einem der Ansprüche 3 bis 5, **dadurch gekennzeichnet, dass** die Schale (114, 116) zumindest eines der beiden Einspritzsysteme frei von Öffnungen an einem Winkelsektor (110, 112) mit vorbestimmtem Winkelmaß und vorbestimmter Winkelposition zum Bilden der die Achse der Kerze (42) schneidenden Erweiterung sind.

7. Kammer nach einem der Ansprüche 4 bis 6, **dadurch gekennzeichnet, dass** die Winkelsektoren (92, 104, 110, 112) der beiden Einspritzsysteme bezüglich einer die Achse der Kerze (42) enthaltenden radialen Ebene symmetrisch zueinander verlaufen.

8. Kammer nach einem der Ansprüche 4 bis 7, **dadurch gekennzeichnet, dass** der bzw. jeder Winkelsektor (92, 104, 110, 112) sich über etwa 20° bis 50° erstreckt.

9. Kammer nach einem der vorangehenden Ansprüche, **dadurch gekennzeichnet, dass** die Kerze (42) umfänglich im Wesentlichen in gleichem Abstand von den beiden aneinandergrenzenden Einspritzsystemen angeordnet ist.

10. Turbomaschine bzw. Turbotriebwerk, wie etwa Turbopropellertriebwerk oder Turbostrahltriebwerk für Flugzeuge, enthaltend eine Brennkammer nach einem der vorangehenden Ansprüche.

## Claims

1. An annular combustion chamber (10) of a turbine engine, the chamber having inner and outer coaxial walls (18, 20) forming two surfaces of revolution connected together at their upstream ends by an annular chamber end wall (22) including openings for mounting injection systems, each comprising an injector (36) and at least one swirler (76, 44) for producing a rotating air stream that mixes downstream with fuel coming from the injector (36), and at least one ignition spark plug (42) mounted in an orifice in the outer wall (20) downstream from the injection systems, the chamber being **characterized in that** the spark plug (42) is situated circumferentially between two adjacent injection systems (S₁, S₂) that are configured so as to produce two air/fuel mixture sheets (B, C) rotating in opposite directions.

2. A chamber according to claim 1, **characterized in that**, as seen from downstream, a first (S₁) of the two injection systems that is situated circumferentially to the left of the spark plug (42) produces an air/fuel mixture sheet (N₁) rotating clockwise and a second (S₂) of the two injection systems situated circumferentially to the right of the spark plug (42) produces an air/fuel mixture sheet (N₂) rotating counterclockwise.

3. A chamber according to claim 2, **characterized in that** each of the two adjacent injection systems (S₄, S₅) comprises a bowl (86, 102) having a substantially frustoconical wall downstream from the swirler and formed with an annular row of air injection orifices (88) for producing a substantially frustoconical and rotating sheet of air/fuel mixture, these orifices (88, 94) being distributed and dimensioned in such a manner that the resulting air/fuel mixture sheet presents a local enlargement crossing the axis of the spark plug.

4. A chamber according to claim 3, **characterized in that** the bowl of at least one of the two injection (S₄, S₅) has orifices (94) of diameter smaller than the diameter of the other orifices (88) of said bowl (86), these smaller-diameter orifices (94) being formed over an angular sector (92, 104) of size and angular position that are predetermined so as to form the enlargement crossing the axis of the spark plug (42).

5. A chamber according to claim 4, **characterized in that** the orifices (94) of the above-mentioned angular sector (92, 104) of each bowl (86, 102) present a diameter that is at least 40% smaller than the diameter of the other orifices in the bowl.

6. A chamber according to any one of claims 3 to 5, **characterized in that** the bowl (114, 116) of at least one of the two injection systems has no orifices over an angular sector (110, 112) of dimension and position that are predetermined in such a manner as to form the enlargement crossing the axis of the spark plug (42).

7. A chamber according to any one of claims 4 to 6, **characterized in that** the angular sectors (92, 104, 110, 112) of the two injection systems are symmetrical to each other about a radial plane containing the axis of the spark plug (42).

8. A chamber according to any one of claims 4 to 7, **characterized in that** the or each above-mentioned angular sector (92, 104, 110, 112) extends over an angle of about 20° to 50°.

9. A chamber according to any preceding claim, **characterized in that** the spark plug (42) is positioned at substantially equal circumferential distances from the two adjacent injection systems.

10. A turbine engine, such as an airplane turbojet or turboprop, having a combustion chamber according to any preceding claim.
